# EUROPEAN PATENT SPECIFICATION

(11) **EP 2 553 004 B1**
(45) Date of publication and mention of the grant of the patent: **19.06.2019**
(21) Application number: 11712656.5
(22) Date of filing: 24.03.2011
(51) Int. Cl.: C08J 5/24, B32B 27/12, B32B 27/38

(54) **COMPOSITE MATERIALS**
VERBUNDWERKSTOFFE
MATERIAUX COMPOSITES

(30) Priority: 26.03.2010 GB 201005103
(43) Date of publication of application: 06.02.2013
(73) Proprietor: Hexcel Composites Limited, Duxford Cambridgeshire CB22 4QB (GB)
(72) Inventor: WHITER, Mark, Cambridgeshire CB11 4AX (GB)
(74) Representative: Pols, Ronald Maarten
(86) International application number: PCT/GB2011/050597
(87) International publication number: WO 2011/117643

(56) References cited:
- WO-A1-2007/038673

## Description

### Technical Field

The present invention relates to composite materials, particularly curable prepregs and semipregs.

### Background

Composite materials have well-documented advantages over traditional construction materials, particularly in providing excellent mechanical properties at very low material densities. As a result, the use of such materials is becoming increasingly widespread and their fields of application range from "industrial" and "sports and leisure" to high performance aerospace components.

Prepregs, comprising a fibre arrangement impregnated with resin such as epoxy resin, are widely used in the generation of such composite materials. Typically a number of plies of such prepregs are "laid-up" as desired and the resulting laminate is cured, typically by exposure to elevated temperatures, to produce a cured composite laminate.

A particular type of prepreg is the so-called semipreg, which involves the fibre arrangement being only partly impregnated with resin, leaving a portion of the fibre arrangement in a "dry" state.

Such semipregs can provide lower porosites in the final cured composite laminate, as the dry regions allow a pathway for entrapped air to escape from the laminate.

A common semipreg arrangement is to have a layer of curable resin in contact with one or two adjacent layers of fibres which stay essentially dry with only very little resin migrating into the adjacent fibres. Such semipregs find particular use as part of large load-bearing structures e.g. spars for wind turbine blades.

However, some resin does inevitably migrate into the fibres over time, particularly during storage, and can pass through to the other face, a phenomenon known as blocking.

Prepregs and semipregs are typically produced as a roll of sheet material. When it is desired to produce a structure from the prepreg or semipreg the roll is unrolled, and the material laid down as desired. To allow this unrolling to occur a solid backing sheet, e.g. polythene or paper, is generally applied to an outer face of the prepreg or semipreg.

Upon rolling the material into a roll the backing sheet prevents adjacent layers of prepreg or semipreg from adhering to each other. As the roll is subsequently unrolled the backing sheet is then removed from the curable prepreg or semipreg, and is then discarded as waste.

Such solid backing sheets are therefore carefully prepared and formulated to provide a non-stick surface so they can detach from a resinous surface and prevent adhesion between adjacent layers of rolled prepreg or semipreg.

However, this use of the backing sheet is wasteful and adds to the cost of production, as it is discarded after use. Furthermore, there is a possibility that the backing sheet will not be successfully removed from the roll despite efforts to the contrary, particularly when it is applied in an automated process, as is increasingly common. When this happens then the entire stack of prepregs and/or semipregs is rejected.

Attempts have been made to produce semipregs which do not require the use of a backing sheet. This has involved increasing the viscosity of the curable resin layer so that it has less tendancy to migrate through any adjacent fibre layer and cause blocking. Whilst this can be achieved, the increase in viscosity reduces the tack and drapability of the semipreg, and only prolongs the inevitable blocking, allowing for a limited storage time. In view of these disadvantages, semipregs without a backing sheet are not currently recommended.

WO 2007/038673 discloses a linerless prepreg, composite articles therefreom and related methods.

Further improvement in this area would therefore be highly desirable.

### Summary of the Invention

The present invention is defined in the claims and relates to a curable sheet-like composite material comprising curable resin and at least one layer of structural fibres, and comprising an outer backing layer having a shear-dependent rheology, whereby the backing layer exhibits essentially no flow at rest on the outer surface of the composite material and exhibits a viscous flow response to induced shear.

The backing layer is applied on the outer face during manufacture of the curable composite material, whereupon it exhibits essentially no flow characteristics. Once the composite material has been rolled onto itself the backing layer remains in place in view of its essentially no flow characterics. It therefore prevents curable resin from adjacent layers of rolled composite material from coming into contact.

Thus, the sheet-like composite material is preferably in the form of a roll. Thus, the composite material is preferably sufficiently flexible so as to be able to form a roll with a diameter of less then 20cm, more preferably less than 10cm.

As such, the composite material is preferably not so thick that it cannot be easily rolled. Thus, typically the composite material has a thickness of from 0.5 to 5.0mm, preferably from 1.0 to 4.0mm.

When the roll of composite material is desired to be used, it is unrolled in known manner. The shear stress that the unrolling action provides causes the backing layer to exhibit a viscous flow response. This has the effect that it flows in response to the shear force, which is away from the point of separation of adjacent layers of the composite material. Thus, the backing layer allows adjacent layers of composite material to separate from the roll without adhering to each other.

The invention is believed to be highly innovative because it seeks to control the inevitable adhesion between adjacent layers when a removable backing sheet, as used in the prior art, is omitted. Rather than preventing adjacent layers from adhering together it is believed that adjacent rolled layer will be adhered together as the shear forces induced upon rolling cause some flow of the backing layer into the fibres of the adjacent rolled layer.

By controlling the rheology to allow the backing layer to remain in place between adjacent layers of composite material when rolled and in storage and also to be able to flow once induced shear from unrolling is experienced, the composite material can be unrolled with the composite material intact without the need for a removable backing paper or sheet.

It can therefore be seen that the backing layer of the invention is not removed, as it forms an integral part of the composite material.

Thus, the composite material is typically free of any removable solid backing sheet.

By "removable" is meant that the sheet can be peeled from the composite material, leaving the remainder of the composite material intact.

The composite material is typically a prepreg or a semipreg. However, the invention is believed to be particularly applicable to semipregs.

A typical arrangement of semipreg includes a layer of curable resin in contact with one or two layers of structural fibres which are not fully impregnated with resin. In this arrangement the backing layer is preferably adjacent to one such structural fibre layer, however other arrangement are possible.

The composite material may comprise additional layers of material, however each must be taken to ensure the composite material remains flexible enough to form a roll.

The composite material of the present invention is particularly suitable for use in forming a structural component, e.g. a spar for wind turbine blades or an aerospace vehicle such as an aircraft. As such structures are generally fairly large, it is preferable that the composite material can form a roll having a length of greater than 10.0cm, and at least 1.0m of rolled material. Thus, the composite material has a surface area of at least 0.1m², preferably at least 0.3m².

It will be understood that the composite materials of the present invention only require one outer face to comprise a backing layer as described herein.

However, it has been found that, following unrolling of a sheet of composite material having only one outer layer of backing layer, the unrolled composite material tends to comprise backing layer on both of its outer layers. This is because it has been found that, as the backing layer flows away from the shearing action at the point of separation of adjacent layers of composite material, part of the backing layer remains at its original location on the composite material and another part transfers to the adjacent layer of composite material. In effect, the backing layer splits to cover both outer faces of the composite material.

Thus, the composite material may comprise two backing layers, each on one of the two outer faces and being of the same composition.

An essential feature of the invention is that the backing layer has a shear-dependent rheology. This means that it exhibits a viscous flow response to induced shear and thus flows as a liquid. However, under the low or near-zero shear environment encountered during storage on a roll, the backing layer exhibits essentially no flow and thus remains in place and does not tend to migrate on storage.

One way for this to be achieved is for the backing layer to exhibit shear-thinning properties and thus behaving as a more viscous fluid at rest and a less viscous fluid in response to shear.

Another possibility is for the backing layer to become a gel at rest, having a small but measurable yield stress sufficient for it to remain essentially solid upon storage. Once the shear forces are encountered when adjacent layers are separated the yield stress is exceeded and the backing layer flows like a liquid away from the region of shear.

Thus, the backing layer exhibits a viscosity of less than 500 Pas, more preferably from 5 to 300 Pas, most preferably from 5 to 150 Pas, at a shear rate of 10s⁻¹, and exhibits a viscosity of greater than 500 Pas, more preferably greater than 1000 Pas, at a shear rate of 0.1s⁻¹. All viscosities being measured at 25°C.

The backing layer comprises curable resin, which is different to the curable resin in the main body of the composite material.

In a preferred embodiment, the backing layer comprises at least 60 wt %, more preferably at least 70 wt % curable resin. In fact it may even be preferable that the backing layer consist essentially of curable resin. Such curable resins known in the art are known to be Newtonian fluids and therefore preferably include rheology-modifying material.

The backing layer comprising curable resin is particularly desirable, as the backing layer is not removed, as it is in the prior art. Thus, by comprising curable resin, the backing sheet can effectively co-cure in with the curable resin in the main body of the composite material. In this way, the backing layer can become part of the composite material upon curing without any detrimental effect on the mechanical properties of the cured composite.

Shear-thinning variants of known curable resins can be made, for example, by adding a sufficient quantity and type of solid particulate material. A suitable material for this is fumed silica particles, although there may be many other suitable particulate materials. In a particularly preferred embodiment, the particulate material is a curable resin solid at room temperature with a melting point greater than 60°C. In this embodiment, not only the resin but also the rheology-modifying material co-cures with the resin in the main body of the composite material.

Gelling variants of known curable resins can be obtained by adding a suitable gelator, e.g. as described in US 7,550,722. Particularly suitable types of non-polymeric gelators include the alkyl ethers of phenols, especially di-functional and tri-functional phenols. Preferably the alkyl moiety of the alkyl ether is within the range of hexyl to octadecyl. Suitably, the backing layer may compare from 2 to 10 wt % of gelator.

Compounds that are particularly suitable for use as non-polymeric gelators include the octyl to octadecyl ethers of catechol, resorcinol, hydroquinone, 4, 4'-bisphenol, the naphthalene diols, the anthracene diols, the anthraquinone diols, pyrogallol, phloroglucinol and stilbene diols.

The fibres in the structural fibre layers may be uni-directional, fabric form or multiaxial. Preferably the fibres are uni-directional and their orientation will vary throughout the composite material, e.g. prepreg or semipreg, for example by arranging for the fibres in neighbouring layers to be orthogonal to each other in a so-called 0/90 arrangement, signifying the angles between neighbouring fibre layers. Other arrangements such as 0/+45/-45/90 are of course possible among many other arrangements.

The fibres may comprise cracked (i.e. stretch-broken), selectively discontinuous or continuous fibres.

The structural fibres may be made from a wide variety of materials such as glass, carbon, graphite, metallised polymers aramid and mixtures thereof. Glass fibres are preferred. The composite material typically comprises from 30 to 70 wt % structural fibres.

As discussed above, in addition to the backing layer (which may itself be largely curable resin), the composite materials of the present invention comprise a curable resin, i.e. a thermosetting resin. The curable resin may be present as a discrete layer or may be fully or partially impregnated into a layer of structural fibres. The composite material typically comprises from 15 to 50 wt % curable resin, not including any curable resin which may be present in the backing layer. Thus, it is typically a Newtonian fluid without shear-dependent rheology.

The curable resin may be selected from those conventionally known in the art, such as resins of phenol-formaldehyde, urea-formaldehyde, 1,3,5-triazine-2,4,6-triamine (melamine), bismaleimide, epoxy resins, vinyl ester resins, benzoxazine resins, polyesters, unsaturated polyesters, cyanate ester resins, or mixtures thereof.

Particularly preferred are epoxy resins, for example monofunctional, difunctional or trifunctional or tetrafunctional epoxy resins.

The epoxy resin may comprise monofunctional, difunctional, trifunctional and/or tetrafunctional epoxy resins.

Suitable difunctional epoxy resins, by way of example, include those based on; diglycidyl ether of Bisphenol F, Bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, or any combination thereof.

Difunctional epoxy resins may be preferably selected from diglycidyl ether of Bisphenol F, diglycidyl ether of Bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl ethers, epoxidised olefins, brominated resins, triglycidyl aminophenyls, aromatic glycidyl amines, heterocyclic glycidyl imidines and amides, glycidyl ethers, fluorinated epoxy resins, or any combination thereof.

Suitable tetrafunctional epoxy resins include N,N,N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY721 from Huntsman Advanced Materials).

The thermosetting resin may also comprise one or more curing agent. Suitable curing agents include anhydrides, particularly poly carboxylic anhydrides; amines, particularly aromatic amines e.g. 1,3-diaminobenzene, 4,4'-diaminodiphenylmethane, and particularly the sulphones, e.g. 4,4'-diaminodiphenyl sulphone (4,4' DDS), and 3,3'-diaminodiphenyl sulphone (3,3' DDS), and the phenol-formaldehyde resins. Preferred curing agents are the amino sulphones, particularly 4,4' DDS and 3,3' DDS.

Further examples of the type and design of the resin and fibres can be found in WO 2008/056123.

The backing layer may additionally comprise performance enhancers. This is particularly beneficial for the case when it is inappropriate to add such materials to the curable resin in the main body of the composite material. It is also to be noted that the material of the backing layer could be expected to largely remain on the outside layer of the composite material during storage and even following cure. Thus, advantage may be taken of the performance enhancers also being localised in this region of the composite. Such performance enhancers would typically be present at a level of from 0 to 10 wt % of the backing layer.

Examples of suitable performance enhancers include flame retardants, toughness, UV stablisers and anti-fungal agents.

In another aspect, the invention relates to a method of forming a roll of uncured composite material wherein a composite material defined herein is rolled onto itself without the presence of a removable solid backing sheet.

Likewise, in another aspect, the invention relates to a method of unrolling a roll of uncured composite material as defined herein rolled onto itself without the presence of a removable solid sheet, whereby the unrolling is facilitated by the viscous flow of the backing layer away from the point of separation of adjacent layers of the composite material.

Once unrolled, the composite material is laid down, typically as part of a multiple layer arrangement to conform to the shape of a structural member. The composite material can then be cured, by exposure to elevated temperature, and optionally elevated pressure, to produce a cured composite material.

The invention will now be illustrated, by way of example, and with reference to the following figures, in which:
Figure 1 is a schematic representation of a semipreg according to the present invention.
Figure 2 is a sectional representation of portion of a rolled composite material as it undergoes unrolling.

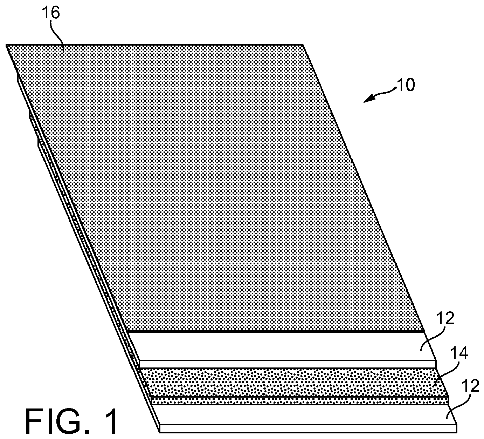

Turning to the figures, figure 1 shows a schematic representation of a semipreg 10 according to the invention. The layers of the semipreg are shown in staggered form for ease of illustration.

The semipreg 10 comprises two layers 12 of 310gsm unidirectional carbon fibre fabric arranged at 45° and 30° angles to the length of the semipreg, as shown in the figure.

Sandwiched between the fibre layers 12 is a 330gsm M9.6 epoxy resin layer 14 (available from Hexcel). One outer face is covered by a backing layer 16 comprising 200gsm of epoxy resin (LY1556) and containing 5% silica particles (Aerosil R202) to provide shear-thinning properties.

In use, the semipreg 10 is rolled onto itself with the backing layer effectively separating adjacent layers of the semipreg 10 during storage.

As the semipreg 10 rolls onto itself, the small shear stresses that occur upon rolling may be sufficient for the backing layer to flow and penetrate the adjacent sheet of dry fibre layer 12. Once this initial flow occurs, the backing layer returns to its substantially non-flowing form and remains in place between layers of semipreg 10 during storage.

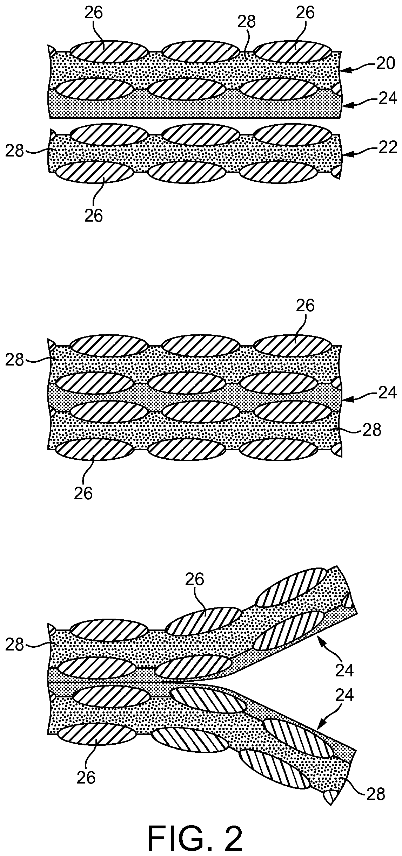

Figure 2 shows schematically the sequence of events that occur upon unrolling. The first image shows a schematic side sectional view through a rolled semipreg according to the invention. Shown is a first semipreg 20 and an adjacent layer of the same semipreg 22. Also shown is the backing layer 24 sandwiched between the semipreg layers 20, 22. Each semipreg comprises structural fibres 26 of unidirectional carbon fibres partially impregnated with curable resin 28, e.g. epoxy resin.

The second image of figure 2 shows the arrangement after an extended period of time in storage. It can be seen that the backing layer continues to isolate the two semipreg layers 20, 22, despite some migration of the adjacent fibres 26 and resin 28 to the backing layer 24.

The third image of figure 2 shows what happens when unrolling of the rolled semipreg is attempted. As the backing layer has shear-dependent rheology, upon inducing the neighbouring semipregs 20 to separate, the backing layer behaves in a liquid-like manner and flows away from the point of maximum shear stress. Thus, the backing layer 24 remains adhered to the neighbouring semipreg layers and instead effectively splits into two, acting as the failure mechanism for unrolling.

Thus, upon unrolling the semipreg sheet will comprise approximately half of the original backing layer 24 on one face and the remainder on the other face.

The unrolled semipreg can then be laid down without the need to remove the backing layer and shaped as desired e.g. to form part of a structure such as a spar for a wind turbine blade or part of an aerospace vehicle structure.

Once formed, the assembly is cured by exposure to elevated temperature and optionally elevated pressure by any suitable means known in the art. As the backing layer is largely comprised of curable resin, it co-cures with the curable resin to contribute to the strength of the resulting cured structure.

### Examples

### Formulating materials:

- Liquid bisphenol A diglycidyl ether (an epoxy resin). LY1556 from Huntsman Advanced Materials, Cambridge, UK.
- Solid bisphenol A diglycidyl ether (an epoxy resin). Epikote 1001 from Hexion Speciality Chemicals B. V., Rotterdam, The Netherlands.
- Dicyandiamide (a curing agent). Dyhard 100 from Alzchem Trostberg GmbH, Trostberg, Germany.
- 3,3'-(4-methyl-1,3-phenylene)bis(1,1-dimethylurea) + (a curing agent). Dyhard UR500 from Alzchem.
- Araldite DY135 blue. Blue pigment from Huntman Advanced Materials, Cambridge, UK..
- Hydrophobic silica. Aerosil R202 from Evonik Industries AG, Essen, Germany.
- Sylvagel 1000 (a gelling agent) from Arizona Chemicals, Almere, The Netherlands.

### Substrate materials

HexFIT 2000: M9.6-LT/35%/BB630/2G semipreg material from Hexcel GmbH, Neumarkt, Austria.

M9.6-LT, M9.7 resin from Hexcel GmbH, Neumarkt, Austria.

Standard semi-preg materials were constructed from a 340 gsm film layer of M9.6-LT, M9.6F-LT or M9.7 resin (Hexcel proprietary formulated resin systems) to which a layer of glass UD fibrous reinforcement is attached to either side of the film.

The backing layer was formulated using a liquid resin, a fumed silica and/or micronized solid badge resin and a curative system such as dicy/urone known to those skilled in the art. Another backing layer was formulated by "gelating" a liquid epoxy resin using an appropriate gelator such as Sylvagel 1000 (see below.)

### Backing layer formulations:

### Example 1

| | |
|---|---|
| LY1556 | 73.69% |
| Epikote 1001 (sieved) | 16.77% |
| Dyhard 100 | 2.97% |
| Dyhard UR500 | 1.35% |
| Aerosil R202 | 4.73% |
| DW0135 blue | 0.49% |

### Example 2

| | |
|---|---|
| LY1556 | 89.13% |
| Dyhard 100 | 3.21% |
| Dyhard UR500 | 1.45% |
| Aerosil R202 | 5.73% |
| DW0135 blue | 0.48% |

### Example 3

| | |
|---|---|
| Epikote 816MV | 95% |
| Sylvagel 1000 | 5% |

When measured using a Bohlin Gemini rheometer with 40mm parallel plates the following viscosities are obtained with respect to shear rate

**Table 1**

| **Shear Rate s⁻¹** | **Example 2 (Pas)** | **Example 3 (Pas)** |
|---|---|---|
| 0.11 | 4148 | 2242 |
| 1.05 | 538 | 314 |
| 10.39 | 111 | 46 |
| 103.11 | 40 | 5 |

The shear-thinning properties of examples 2 and 3 are clearly shown.

The backing layer was then applied to one of the outer surfaces of the material up to 200gsm.

Such assemblies then have the ability to be pressed together without the need for a polythene interleaf. This has been measured using a test method of pressing together two plies of material such that the backing layer is acting as an interface between the two plies.

The backing layer has been shown to distribute itself evenly on to the once adjacent substrate surface on peel.

### Peel Testing

Double sided pressure sensitive adhesive fabric was used to secure samples of semi-preg to a rigid aluminium substrate and a flexible aluminium foil substrate. These were pressed at ambient temperature at 11kPa for a given time using a pneumatic press. The sample panels were then cut into 25mm strips for testing.

Testing was carried out using an Instron 5569 test frame using Instron Series IX software and a 2kN load cell. The foil side was peeled off at 180° at a cross head speed of 300mm/min, with the cross head moving 200mm. This peeled back 100mm of the sample. Peel strengths were recorded in units of N/25mm. Qualitative assessment of fibre tow damage was also recorded.

It was found that a control sample consisting of 2 plies of standard semi-preg material, HexFIT 2000: M9.6-LT/35%/BB630, required a peel force of 61N with severe fibre tow damage after 7 days under pressure at 11kPa. The same material using an antiblocking film described in examples 1 and 2 both required a peel force of 14N with no fibre damage observed after 7 days under pressure. The individual results are summarised in the following table.

**Table 2**

| **Sample no.** | **Control (N)** | **Example 1 (N)** | **Example 2 (N)** |
|---|---|---|---|
| 1 | 52.8 | 14.5 | 18.3 |
| 2 | 60.3 | 11.6 | 16.8 |
| 3 | 67.4 | 13.2 | 14.1 |
| 4 | 62.2 | 16.3 | 10.3 |
| 5 | 56.5 | 13.8 | 11.0 |
| 6 | 68.3 | 14.9 | 13.2 |
| Average | 61.3 | 14.1 | 14.0 |

Furthermore, it was found that a control sample consisting of 2 plies of standard semi-preg material, HexFIT 2000:M9.6-LT/35%/BB630, required a peel force of 53N with fibre tow damage after 15 minutes under pressure at 11kPa. A sample of the same material using an antiblocking film described in example 3 required a peel force of 4N with no fibre damage after 15 minutes under pressure at 11kPa. Individual results are summarised below

**Table 3**

| **Sample no.** | **Control (N)** | **Example 3 (N)** |
|---|---|---|
| 1 | 61.3 | 7.9 |
| 2 | 65.0 | 2.9 |
| 3 | 53.3 | 1.9 |
| 4 | 46.6 | 2.7 |
| 5 | 45.6 | 3.2 |
| 6 | 45.9 | 7.8 |
| Average | 52.9 | 4.4 |

### Tg and ILSS evaluation

A control laminate consisting of 7 plies of HexFIT 2000: M9.6-LT/35%/BB630 and test laminates consisting of 7 plies of HexFIT 2000: M9.6-LT/35%/BB630 coated with an antiblocking layer described in examples 1 and 2 were cured in a vacuum bag assembly for 1 hour at 120°C. All laminates exhibited a glass transition temperature of 126-127°C and an interlaminar shear strength (ILSS) of 47MPa.

## Claims

1. A curable sheet-like composite material comprising curable resin and at least one layer of structural fibres, and comprising an outer backing layer which comprises curable resin different to the curable resin in the main body of the composite material, the backing layer having a shear-dependent rheology exhibiting a viscosity of less than 500 Pas, more preferably from 5 to 300 Pas, most preferably from 5 to 150 Pas, at a shear rate of 10s⁻¹, and exhibits a viscosity of greater than 500 Pas, more preferably greater than 1000 Pas, at a shear rate of 0.1s⁻¹, all viscosities being measured at 25°C as described herein whereby the backing layer exhibits essentially no flow at rest on the outer surface of the composite material and exhibits a viscous flow response to induced shear.

2. A composite material according to any one of the preceding claims, which is free of any removable solid backing sheet.

3. A composite material according to claim 1 or claim 2, which is sufficiently flexible so as to be able to form a roll with a diameter of less than 20cm, preferably less than 10cm.

4. A composite material according to any one of the preceding claims, which has a thickness of from 0.5 to 5.0mm, preferably from 1.0 to 4.0mm.

5. A composite material according to any one of the preceding claims, which is a prepreg or a semipreg.

6. A composite material according to claim 5, wherein the composite material is a semipreg and includes a layer of curable resin in contact with one or two layers of structural fibres which are not impregnated with resin, wherein the backing layer is adjacent to one such structural fibre layer.

7. A composite material according to any one of the preceding claims, which comprises two backing layers, each on one of the two outer faces and being of the same composition.

8. A composite material according to any one of the claims 1 to 7, wherein the backing layer forms a gel at rest.

9. A composite material according to any one of the preceding claims, wherein the backing layer comprises at least 60 wt %., preferably at least 70 wt %. curable resin, more preferably that the backing layer consists essentially of curable resin.

10. A composite material according to any one of the preceding claims, wherein the backing layer comprises particulate material, preferably the particulate material is a curable resin solid at room temperature with a melting point greater than 60°C.

11. A method of unrolling a roll of uncured composite material according to any one of claims 1 to 10 rolled onto itself without the presence of a removable solid sheet, whereby the unrolling is facilitated by the viscous flow of the backing layer away from the point of separation of adjacent layers of the composite material.

## Patentansprüche

1. Härtbares flächiges Verbundmaterial, umfassend härtbares Harz und wenigstens eine Schicht von Strukturfasern und umfassend eine äußere Trägerschicht, die härtbares Harz umfasst, das von dem härtbaren Harz in dem Hauptkörper des Verbundmaterials verschieden ist, wobei die Trägerschicht eine scherungsabhängige Rheologie aufweist, die eine Viskosität von weniger als 500 Pas, bevorzugter von 5 bis 300 Pas, höchst bevorzugt von 5 bis 150 Pas, bei einer Scherrate von 10 s⁻¹ zeigt und eine Viskosität von höher als 500 Pas, bevorzugter höher als 1000 Pas, bei einer Scherrate von 0,1 s⁻¹ zeigt, wobei alle Viskositäten bei 25 °C wie hierin beschrieben gemessen werden, wodurch die Trägerschicht im Ruhezustand im Wesentlichen kein Fließen an der Außenoberfläche des Verbundmaterials zeigt und bei induzierter Scherung eine Antwort von viskosem Fließen zeigt.

2. Verbundmaterial gemäß einem der vorstehenden Ansprüche, das frei von einer entfernbaren festen Trägerbahn ist.

3. Verbundmaterial gemäß Anspruch 1 oder Anspruch 2, die ausreichend flexibel ist, um eine Rolle mit einem Durchmesser von weniger als 20 cm, vorzugsweise weniger als 10 cm, bilden zu können.

4. Verbundmaterial gemäß einem der vorstehenden Ansprüche, das eine Dicke von 0,5 bis 5,0 mm, vorzugsweise von 1,0 bis 4,0 mm, aufweist.

5. Verbundmaterial gemäß einem der vorstehenden Ansprüche, das ein Prepreg oder ein Semipreg ist.

6. Verbundmaterial gemäß Anspruch 5, wobei das Verbundmaterial ein Semipreg ist und eine Schicht von härtbarem Harz in Kontakt mit einer oder zwei Schichten von Strukturfasern umfasst, die nicht mit Harz imprägniert sind, wobei die Trägerschicht zu einer solchen Strukturfaserschicht benachbart ist.

7. Verbundmaterial gemäß einem der vorstehenden Ansprüche, umfassend zwei Trägerschichten, jede an einer der beiden Außenflächen, die die gleiche Zusammensetzung aufweisen.

8. Verbundmaterial gemäß einem der Ansprüche 1 bis 7, wobei die Trägerschicht im Ruhezustand ein Gel bildet.

9. Verbundmaterial gemäß einem der vorstehenden Ansprüche, wobei die Trägerschicht wenigstens 60 Gew.-%, vorzugsweise wenigstens 70 Gew.-%, an härtbarem Harz umfasst, wobei die Trägerschicht bevorzugter im Wesentlichen aus härtbarem Harz besteht.

10. Verbundmaterial gemäß einem der vorstehenden Ansprüche, wobei die Trägerschicht partikelförmiges Material umfasst, wobei das partikelförmige Material vorzugsweise ein bei Raumtemperatur festes, härtbares Harz mit einem Schmelzpunkt von höher als 60 °C ist.

11. Verfahren zum Abrollen einer Rolle von ungehärtetem Verbundmaterial gemäß einem der Ansprüche 1 bis 10, das ohne Vorhandensein einer entfernbaren festen Bahn auf sich selbst aufgerollt ist, wobei das Abrollen durch viskoses Fließen der Trägerschicht weg von dem Punkt der Trennung von benachbarten Schichten des Verbundmaterials erleichtert wird.

## Revendications

1. Matériau composite durcissable de type feuille comprenant une résine durcissable et au moins une couche fibres structurales et comprenant une couche de support externe qui comprend une résine durcissable différente de la résine durcissable présente dans le corps principal du matériau composite, la couche de support possédant une rhéologie dépendante au cisaillement montrant une viscosité de moins de 500 Pas, plus préférablement de 5 à 300 Pas, le plus préférablement de 5 à 150 Pas, à une vitesse de cisaillement de 10 s⁻¹ et montre une viscosité supérieure à 500 Pas, plus préférablement supérieure à 1000 Pas, à une vitesse de cisaillement de 0,1 s⁻¹, toutes les viscosités étant mesurées à 25°C tel que décrit dans le présent document
selon lequel la couche de support ne montre essentiellement pas d'écoulement au repos sur la surface externe du matériau composite et montre une réponse d'écoulement visqueux à un cisaillement induit.

2. Matériau composite selon la revendication précédente, qui est exempt d'une quelconque feuille de support solide amovible.

3. Matériau composite selon la revendication 1 ou la revendication 2, qui est suffisamment flexible pour que l'on puisse former un rouleau d'un diamètre inférieur à 20 cm, préférablement inférieur à 10 cm.

4. Matériau composite selon l'une quelconque des revendications précédentes, qui a une épaisseur de 0,5 à 5,0 mm, préférablement de 1,0 à 4,0 mm.

5. Matériau composite selon l'une quelconque des revendications précédentes, qui est un pré-imprégné ou un semi-imprégné.

6. Matériau composite selon la revendication 5, le matériau composite étant un semi-imprégné et incluant une couche de résine durcissable en contact avec une ou deux couches de fibres structurales qui ne sont pas imprégnées de résine, la couche de support étant adjacente à une telle couche de fibre structurale.

7. Matériau composite selon l'une quelconque des revendications précédentes, qui comprend deux couches de support, chacune sur l'une des deux faces extérieures et étant de la même composition.

8. Matériau composite selon l'une quelconque des revendications 1 à 7, la couche de support formant un gel au repos.

9. Matériau composite selon l'une quelconque des revendications précédentes, la couche de support comprenant au moins 60% en poids, préférablement 70% en poids, de résine durcissable, plus préférablement la couche de support consistant essentiellement de résine durcissable.

10. Matériau composite selon l'une quelconque des revendications précédentes, la couche de support comprenant un matériau particulaire, préférablement le matériau particulaire étant une résine durcissable solide à température ambiante avec un point de fusion supérieur à 60°C.

11. Procédé de déroulage d'un rouleau de matériau composite non durci selon l'une quelconque des revendications 1 à 10, roulé sur lui-même en l'absence d'une feuille solide amovible, selon lequel le déroulage est facilité par l'écoulement visqueux de la couche de support à l'écart du point de séparation des couches adjacentes de matériau composite.
